(19) Europäisches Patentamt / European Patent Office / Office européen des brevets

(11) **EP 3 733 893 B1**

(12) **EUROPEAN PATENT SPECIFICATION**

(45) Date of publication and mention
of the grant of the patent:
**31.01.2024   Bulletin 2024/05**

(21) Application number: **18894900.2**

(22) Date of filing: **20.11.2018**

(51) International Patent Classification (IPC):
*C22C 38/00* (2006.01)    *B23K 20/26* (2006.01)
*B23K 20/24* (2006.01)    *B23K 31/02* (2006.01)
*C22C 38/04* (2006.01)    *C22C 38/58* (2006.01)
*C22C 38/02* (2006.01)    *B21B 1/38* (2006.01)
*C22C 38/08* (2006.01)    *C22C 38/12* (2006.01)
*C22C 38/16* (2006.01)    *C21D 9/46* (2006.01)
*C22C 38/14* (2006.01)    *C22C 38/18* (2006.01)
*B23K 20/04* (2006.01)    *B32B 15/01* (2006.01)
*B23K 20/227* (2006.01)   *C22C 38/40* (2006.01)
*C21D 1/25* (2006.01)    *C21D 6/00* (2006.01)
*C21D 8/02* (2006.01)    *B23K 101/18* (2006.01)
*B23K 103/04* (2006.01)   *B23K 103/18* (2006.01)

(52) Cooperative Patent Classification (CPC):
**C21D 9/46; B23K 20/04; B23K 20/227;
B23K 20/24; B23K 20/26; B23K 31/02;
C22C 38/005; C22C 38/02; C22C 38/04;**
B23K 2101/18; B23K 2103/04; B23K 2103/05;
B23K 2103/18; B32B 15/011; C21D 1/25;    (Cont.)

(86) International application number:
**PCT/JP2018/042875**

(87) International publication number:
**WO 2019/130914 (04.07.2019 Gazette 2019/27)**

(54) **CLADDED STEEL PLATE**

PLATTIERTES STAHLBLECH

TÔLE D'ACIER PLAQUÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.12.2017   JP 2017253966**

(43) Date of publication of application:
**04.11.2020   Bulletin 2020/45**

(73) Proprietor: **JFE Steel Corporation**
**Tokyo 100-0011 (JP)**

(72) Inventors:
• **KURONUMA, Yota**
**Tokyo 100-0011 (JP)**
• **YOKOTA, Tomoyuki**
**Tokyo 100-0011 (JP)**

• **HASE, Kazukuni**
**Tokyo 100-0011 (JP)**

(74) Representative: **Grünecker Patent- und
Rechtsanwälte
PartG mbB
Leopoldstraße 4
80802 München (DE)**

(56) References cited:
WO-A1-2015/059909    JP-A- H0 665 686
JP-A- 2008 030 086    JP-A- 2009 233 708
JP-B2- 3 260 232    JP-B2- 5 499 733

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **Arif Sugianto ET AL: "PREDICTION OF HARDNESS DISTRIBUTION OF WATER-QUENCHED S45C STEEL PARTS BY COMPUTER SIMULATION Heat Treatment Simulation View project PREDICTION OF HARDNESS DISTRIBUTION OF WATER-QUENCHED S45C STEEL PARTS BY COMPUTER SIMULATION", , 31 January 2008 (2008-01-31), XP055740386, Retrieved from the Internet: URL:https://www.researchgate.net/publicati on/272502200_PREDICTION_OF_HARDNESS_D ISTRI BUTION_OF_WATER-QUENCHED_S45C_STEE L_PARTS_ BY_COMPUTER_SIMULATION [retrieved on 2020-10-15]**

(52) Cooperative Patent Classification (CPC): (Cont.)
C21D 6/005; C21D 6/008; C21D 8/0226;
C21D 8/0263; C21D 2211/002; C21D 2211/005;
C21D 2211/008; C21D 2251/02; C22C 38/08;
C22C 38/12; C22C 38/14; C22C 38/16;
C22C 38/18; C22C 38/40

**Description**

TECHNICAL FIELD

This disclosure relates to clad steel plates used in chemical tankers and the like.

BACKGROUND

A clad steel plate is a steel plate where two or more metals having different properties are bonded or joined together, such as a steel plate obtained by bonding or joining a cladding metal made of a high-alloy steel material showing high corrosion resistance to a base steel plate made of a so-called common steel such as carbon steel. That is, a clad steel plate is formed by metallurgically bonding or joining two types of metals having different properties, and unlike platings, there is no concern of peeling. Further, a clad steel plate has various characteristics which can not be achieved with a single metal or alloy.

For example, by selecting a steel material having corrosion resistance according to the operating environment as a cladding metal, it is possible to provide corrosion resistance equivalent to that of a solid metal while suppressing the use of expensive alloying elements. In addition, high strength and high toughness carbon steel and low-alloy steel can be applied to the base steel plate.

As such, in a clad steel plate, it is possible to provide corrosion resistance equivalent to that of a solid metal while suppressing the use of expensive alloying elements, as well as strength and toughness equivalent to those of carbon steel and low-alloy steel. Therefore, a clad steel plate has an advantage that it can provide both economic efficiency and functionality.

For this reason, a clad steel plate using a high-alloy steel material as a cladding metal is considered to be a very useful functional steel material, and in recent years the needs thereof have been increasing more and more in various industrial fields.

As a technique relating to such clad steel plates, for example, JPH7292445A (PTL 1) describes:

"A duplex stainless clad steel using a duplex stainless steel as a cladding metal and using a steel as a base steel, the steel having a chemical composition containing, in weight %, C: 0.02 % to 0.15 %, Si: 0.5 % or less, Mn: 0.8 % to 2 %, Ni: 1 % or less, Cu: 0.2 % to 1 %, Mo: 0.15 % or less, V: 0.06 % or less, Ti: 0.008 % to 0.04 %, Al: 0.01 % to 0.07 %, and N: 0.003 % to 0.015 %, with the balance consisting of Fe and inevitable impurities."

JPH5154672A (PTL 2) describes:

"A method of producing a high strength and high toughness clad steel plate, the method comprising: assembling an asymmetric clad slab from a cladding metal and a base steel, the cladding metal composed of an austenitic stainless steel or an austenitic Ni-based alloy containing 0.03 wt% or less of C and the base steel composed of a carbon steel or a low-alloy steel containing 0.08 wt% or less of C; then heating the asymmetric clad slab to a temperature range of 1050 °C or higher; then rolling the asymmetric clad slab with a cumulative rolling reduction ratio of 30 % or more in a temperature range of 850 °C to 1000 °C, then with a cumulative rolling reduction ratio of 30 % or more in a temperature range of 750 °C to 850 °C; then finishing the rolling in a temperature range of 750 °C or higher and lower than 800 °C; and then performing air cooling."

Further, JP2015224376A (PTL 3) describes a low-yield-ratio clad steel plate having a complex structure containing hard martensite in soft bainite that is produced by performing reheating to a temperature range of 550 °C to 750 °C at a heating rate of 0.5 °C/s or higher immediately after stopping accelerated cooling to concentrate C into untransformed austenite. JP 2008 030086 A discloses a clad steel plate.

CITATION LIST

Patent Literature

PTL 1: JPH7292445A
PTL 2: JPH5154672A
PTL 3: JP2015224376A

SUMMARY

(Technical Problem)

Ductility is also required for a clad steel plate from the viewpoint of formability and the like, and is a particularly important characteristic in applications requiring processing to complicated shapes such as chemical tanker members.
However, in the clad steel of PTL 1, the steel plate described in PTL 2, and the clad steel of PTL 3, ductility is not taken into consideration.
For this reason, development of a clad steel plate having not only high strength and high toughness, but also excellent ductility is currently desired.
It would thus be helpful to provide a clad steel plate excellent in ductility while securing high strength and high toughness.

(Solution to Problem)

As a result of intensive studies made to solve the above problems, we discovered the following.

(A) In the manufacturing process of a clad steel plate, when bonding or joining a base steel plate and a cladding metal together, a base steel plate is rolled at high temperature. In this respect, from the viewpoint of improving ductility, it is effective to properly adjust the chemical composition of the base steel plate, to control the cooling conditions immediately after the rolling such that the surface portion and the inner portion of the base steel plate had different cooling rates, and to form a hard microstructure mainly composed of bainite phase and martensite phase in the surface portion of the base steel plate, while forming a soft microstructure containing at least a certain amount of ferrite phase in the inner portion of the base steel plate.
(B) However, by merely forming a hard microstructure in the surface portion of the base steel plate and a soft microstructure in the inner portion, elongation was not sufficient especially when applying tensile stress exceeding the yielding stress (in other words, the plastic deformation range leading to fracture beyond elastic limit is narrow), and the obtained ductility could not be satisfactory enough.
(C) As a result of extensive studies to solve this problem, it was revealed that the hardness difference in the thickness direction of the base steel plate has a large effect on ductility, in particular, elongation in the plastic deformation range leading to fracture beyond elastic limit. That is, when the difference in hardness between the surface portion and the inner portion of the base steel plate becomes too large, necking phenomenon occurs early due to localization of strain when a tensile stress exceeding the yielding stress is applied, and consequently fracture occurs at an early stage.
(D) As a result of further examination based on this point, as described above, it was found that it is important to perform tempering treatment under appropriate conditions with the surface portion of the base steel plate being made into a hard microstructure while the inner portion thereof into a soft microstructure, and to make the difference in hardness between the surface portion and the inner portion of the base steel plate to be 25 or more and 80 or less in terms of Vickers hardness. As a consequence, the desired strength is secured, localization of strain hardly occurs, and the ductility is further improved.

The present disclosure is based on these discoveries and further studies.
The invention is defined in the appended claims.

(Advantageous Effect)

According to the present disclosure, it is possible to provide a clad steel plate excellent in ductility while maintaining high corrosion resistance as well as high strength and high toughness.
Being excellent in ductility, this clad steel plate is particularly advantageous for applications requiring processing to complicated shapes, such as for chemical tanker members.

BRIEF DESCRIPTION OF THE DRAWING

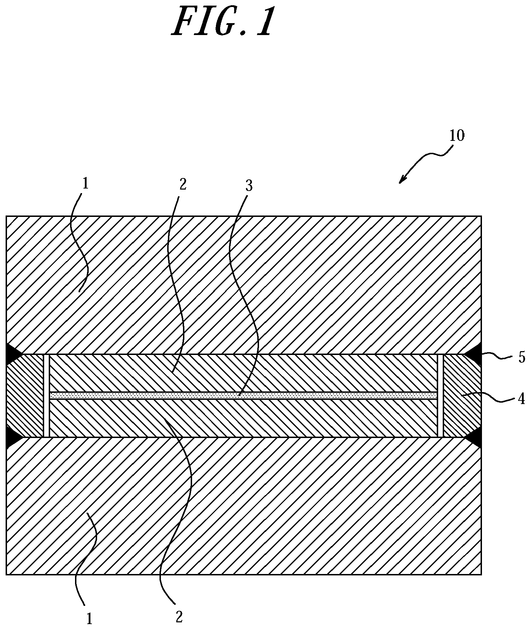

FIG. 1 schematically illustrates a cross section of a clad slab.

DETAILED DESCRIPTION

The following describes the present disclosure in detail.

The present disclosure is directed to a clad steel plate comprising: a base steel plate; and a cladding metal made of a corrosion-resistant alloy bonded or joined to one surface of the base steel plate. The thickness of the clad steel plate is not particularly limited, yet is preferably 6 mm to 45 mm. Also, the thicknesses of the base steel plate and the cladding metal are preferably about 5 mm to 40 mm and 1 mm to 5 mm, respectively.

First, the chemical composition of the base steel plate of the disclosed clad steel plate will be described. The % representations below indicating the chemical composition are in mass% unless stated otherwise.

1. Chemical composition of base steel plate

C: 0.02 % to 0.10 %

C is an element for improving the strength of steel. To obtain this effect, C content is to be 0.02 % or more. However, a C content beyond 0.10 % causes deterioration of weldability and toughness. Therefore, the C content is 0.02 % to 0.10 %. It is preferably 0.08 % or less, and more preferably 0.07 % or less.

Si: 1.00 % or less

Si is an element effective for deoxidation and for improving the strength of steel. In order to obtain these effects, Si content is set to 0.01 % or more. However, when the Si content exceeds 1.00 %, the surface characteristics and toughness of steel deteriorate. Therefore, the Si content is 1.00 % or less. It is preferably 0.10 % or more. It is preferably 0.70 % or less, and more preferably 0.50 % or less.

Mn: 0.50 % to 2.00 %

Mn is an element for improving the strength of steel. In order to obtain this effect, Mn content is to be 0.50 % or more. However, when the Mn content exceeds 2.00 %, the weldability deteriorates and the alloy cost increases. Therefore, the Mn content is 0.50 % to 2.00 %. It is preferably 0.80 % or more, and more preferably 1.00 % or more. It is preferably 1.80 % or less.

P: 0.030 % or less

P is an inevitable impurity in the steel, which leads to deterioration of the toughness particularly when the P content exceeds 0.030 %. Therefore, the P content is 0.030 % or less. It is preferably 0.0001 % or more. It is preferably 0.020 % or less.

S: 0.020 % or less

As with P, S is an inevitable impurity in the steel, which leads to deterioration of the toughness especially when the S content exceeds 0.020 %. Therefore, the S content is 0.020 % or less. It is preferably 0.0001 % or more. It is preferably 0.010 % or less.

Ceq: 0.20 to 0.50

Ceq is a hardenability index of steel defined by the following formula (1), and it is necessary to set Ceq within an appropriate range in order to obtain a desired microstructure, and hence desired strength and toughness. By setting Ceq to 0.20 or more, sufficient hardenability and desired strength are secured. However, when Ceq exceeds 0.50, the microstructure of the surface portion of the base steel plate becomes excessively hard, deteriorating the toughness. Therefore, Ceq is from 0.20 to 0.50. It is preferably 0.25 or more. It is preferably 0.40 or less.

$$Ceq = C + Mn/6 + (Cu + Ni)/15 + (Cr + Mo + V)/5 \qquad (1),$$

where C, Mn, Cu, Ni, Cr, Mo, and V are contents in mass% of the corresponding elements in the chemical composition of the base steel plate. When C, Mn, Cu, Ni, Cr, Mo, and/or V are not contained in the chemical composition of the base steel plate, they may be calculated as "0", respectively.

In addition to the above-described basic components, the chemical composition may further contain at least one selected from the group consisting of Ni: 0.01 % to 1.00 %, Cr: 0.01 % to 0.50 %, Mo: 0.01 % to 0.50 %, V: 0.001 % to 0.100 %, Nb: 0.005 % to 0.050 %, Ti: 0.005 % to 0.100 %, Al: 0.005 % to 0.200 %, Cu: 0.01 % to 0.70 %, Ca:

0.0003 % to 0.0050 %, B: 0.0003 % to 0.0030 %, and REM: 0.0003 % to 0.0100 %.

Ni: 0.01 % to 1.00 %

Ni is an element effective for improving the hardenability and toughness of steel. This effect is exhibited when the Ni content is 0.01 % or more. However, when the Ni content exceeds 1.00 %, the weldability deteriorates and the alloy cost also increases. Therefore, when Ni is contained, the Ni content is 0.01 % to 1.00 %. It is more preferably 0.50 % or less.

Cr: 0.01 % to 0.50 %

Cr is an element for improving the hardenability of steel, and improves the strength and toughness of the steel after rolling. This effect is exhibited when the Cr content is 0.01 % or more. However, when the Cr content exceeds 0.50 %, weldability and toughness deteriorate. Therefore, when Cr is contained, the Cr content is 0.01 % to 0.50 %. It is more preferably 0.30 % or less.

Mo: 0.01 % to 0.50 %

As with Cr, Mo is an element for improving the hardenability of steel, and improves the strength and toughness of the steel after rolling. This effect is exhibited when the Mo content is 0.01 % or more. However, when the Mo content exceeds 0.50 %, weldability and toughness deteriorate. Therefore, when Mo is contained, the Mo content is 0.01 % to 0.50 %. It is more preferably 0.30 % or less.

V: 0.001 % to 0.100 %

V improves the strength of the steel by forming carbonitrides. This effect is exhibited when the V content is 0.001 % or more. However, when the V content exceeds 0.100 %, toughness deteriorates. Therefore, when V is contained, the V content is 0.001 % to 0.100 %. It is more preferably 0.005 % or more. It is more preferably 0.050 % or less.

Nb: 0.005 % to 0.050 %

As with V, Nb improves the strength of steel by forming carbonitrides. This effect is exhibited when the Nb content is 0.005 % or more. However, when the Nb content exceeds 0.050 %, toughness deteriorates. Therefore, when Nb is contained, the Nb content is 0.005 % to 0.050 %. It is more preferably 0.030 % or less.

Ti: 0.005 % to 0.100 %

Ti improves the strength and toughness of steel by forming carbonitrides and then refining crystal grains. This effect is exhibited when the Ti content is 0.005 % or more. However, when the Ti content exceeds 0.100 %, the toughness of the steel including the welded portion deteriorates. Therefore, when Ti is contained, the Ti content is 0.005 % to 0.100 %. It is more preferably 0.050 % or less.

Al: 0.005 % to 0.200 %

Al is added as a deoxidizer, and its deoxidation effect can be obtained when its content is 0.005 % or more. However, when the Al content exceeds 0.200 %, the toughness of the welded portion deteriorates. Therefore, when Al is contained, the Al content is 0.005 % to 0.200 %. It is more preferably 0.100 % or less.

Cu: 0.01 % to 0.70 %

Cu is an element for improving the hardenability of steel, and improves the strength and toughness of the steel after rolling. This effect is exhibited when the Cu content is 0.01 % or more. However, when the Cu content exceeds 0.70 %, weldability and toughness deteriorate. Therefore, when Cu is contained, the Cu content is 0.01 % to 0.70 %. It is more preferably 0.50 % or less.

Ca: 0.0003 % to 0.0050 %

Ca refines the microstructure of a heat-affected zone and improves the toughness. This effect is exhibited when the Ca content is 0.0003 % or more. However, when the Ca content exceeds 0.0050 %, coarse inclusions form and the toughness deteriorates. Therefore, when Ca is contained, the Ca content is 0.0003 % to 0.0050 %. It is more preferably 0.0030 % or less.

B: 0.0003 % to 0.0030 %

B improves the hardenability and improves the strength and toughness of steel after rolling. This effect is exhibited when the B content is 0.0003 % or more. However, when the B content exceeds 0.0030 %, the toughness of the welded portion deteriorates. Therefore, when B is contained, the B content is 0.0003 % to 0.0030 %. It is more preferably 0.0020 % or less.

REM: 0.0003 % to 0.0100 %

As with Ca, REM refines the structure of a heat-affected zone and improves the toughness. This effect is exhibited when the REM content is 0.0003 % or more. However, when the REM content exceeds 0.0100 %, coarse inclusions form and the toughness deteriorates. Therefore, when REM is contained, the REM content is 0.0003 % to 0.0100 %. It is more preferably 0.0080 % or less.

Components other than the above are Fe and inevitable impurities.

2. Steel microstructure of base steel plate

Further, it is important in the present disclosure that the base steel plate constituting the clad steel plate comprises a microstructure of a surface portion containing, in terms of area fraction, at least one of a bainite phase or a martensite phase in an amount of 80 % or more in total, and a microstructure of an inner portion containing, in terms of area fraction, a ferrite phase in an amount of 30 % or more.

As used herein, the microstructure of the surface portion of the base steel plate is one measured at a position of 1 mm in depth in a thickness direction from another surface of the base steel plate on a side not bonded or joined to the cladding metal.

The microstructure of the inner portion of the base steel plate is one measured at a position of 1 mm in depth in the thickness direction from an interface between the base steel plate and the cladding metal bonded or joined together. Hereinafter, the microstructures of the surface portion and the inner portion of the base steel plate will be described.

Microstructure of the surface portion of the base steel plate: the area fraction of the bainite phase and the martensite phase is 80 % or more in total In order to secure the strength of the entire clad steel plate, it is desirable that the surface portion of the base steel plate has high hardness. Therefore, the area fraction of the bainite phase and the martensite phase in the hard phase of the surface portion of the base steel plate is 80 % or more in total. It is preferably 90 % or more. The upper limit is not particularly limited, and may be 100 %.

Further, the residual microstructures may include one or more phases other than the bainite phase and the martensite phase, such as a ferrite phase or a pearlite phase. For the residual microstructures, it is acceptable if the total area fraction is 20 % or less. The area fraction is preferably 10 % or less. The area fraction of the residual microstructures may be 0 %.

Microstructure of the inner portion of the base steel plate: area fraction of ferrite phase is 30 % or more

In order to secure the ductility and toughness of the entire clad steel plate, it is desirable that the inner portion of the base steel plate is soft. For this reason, in the microstructure of the inner portion of the base steel plate, the area fraction of the ferrite phase needs to be 30 % or more. It is preferably 35 % or more. It is more preferably 40 % or more. The upper limit is not particularly limited, yet from the viewpoint of securing the overall strength, the upper limit of the area fraction of the ferrite phase is preferably about 95 %.

A bainite phase, a martensite phase, and the like may be included as the residual microstructures other than the ferrite phase, and it is acceptable if the total area fraction of these remaining microstructures is 70 % or less. It is preferably 65 % or less, and more preferably 60 % or less. The lower limit of the total area fraction of the residual microstructure is preferably about 5 %.

As used herein, the martensite phase and the bainite phase include so-called tempered martensite and tempered bainite, respectively.

3. Difference in hardness between the surface portion and the inner portion of the base steel plate: 25 or more to 80 or less in terms of Vickers hardness

As described above, the ductility of the base steel plate, in particular, the elongation in the plastic deformation range leading to fracture beyond elastic limit, is greatly influenced by the hardness difference in the thickness direction of the base steel plate. If the hardness difference between the hard surface portion of the base steel plate and the soft inner portion of the base steel plate becomes too large, necking phenomenon occurs early due to localization of the strain when a tensile stress exceeding the yielding stress is applied, and consequently fracture occurs at an early stage. Therefore, the difference in hardness between the surface portion and the inner portion of the base steel plate needs to be 80 or less in terms of Vickers hardness. It is preferably 60 or less.

However, if the difference in hardness between the surface portion and the inner portion of the base steel plate is too small, it is difficult to achieve both strength and ductility at the same time. For this reason, the difference in hardness between the surface portion and the inner portion of the base steel plate is 25 or more, and more preferably 30 or more.

The hardness of the surface portion of the base steel plate is one measured at a position of 1 mm in depth in a thickness direction from another surface of the base steel plate on a side not bonded or joined to the cladding metal. The hardness of the inner portion of the base steel plate is one measured at a position of 1 mm in depth in the thickness direction from an interface between the base steel plate and the cladding metal bonded or joined together.

4. Cladding metal

The clad steel plate disclosed herein comprises: a base steel plate; and a cladding metal made of a corrosion-resistant alloy bonded or joined to one surface of the base steel plate.

Examples of the corrosion-resistant alloy include austenitic stainless steels (for example, austenitic stainless steels such as SUS 304, SUS 304L, SUS 316, and SUS 316L as specified in the JIS standard, and austenitic-ferritic duplex stainless steels such as SUS 329J1, SUS 329J3L, SUS 329J4L, SUS323L, SUS821L1, and SUS327L1 as specified in the JIS standard [hereinafter also referred to as duplex stainless steels]), and nickel-based alloys (for example, NCF 625 and NCF 825 as specified in the JIS standard), and may be appropriately selected in accordance with the application and the like. For example, austenitic stainless steel (SUS 316L), duplex stainless steel, or the like is suitable for use in a cargo tank of a chemical tanker.

5. Production method

Next, a preferred production method of the clad steel plate disclosed herein will be described.

First, a slab is prepared by stacking a base steel plate material having the chemical composition of the above-described base steel plate and a cladding metal material made of a corrosion-resistant alloy. The base steel plate material may be prepared by a conventional smelting process.

FIG. 1 illustrates a cross-sectional view of the clad slab 10 as an example. As illustrated in FIG. 1, a clad slab 10 can be formed by piling one stacked set of a base steel plate material 1 and a cladding metal material 2 on another such that the cladding metal materials face each other. At this point, a separating agent 3 can be applied between the cladding metal materials 2. The separating agent 3 is not particularly limited, yet is preferably a relatively inexpensive one with sufficient separatability, such as $Al_2O_3$. In FIG. 1, reference numeral 4 denotes a spacer, and reference numeral 6 denotes a welded portion.

In this way, when combinations of base steel plate materials and cladding metal materials are piled on top of one another in a layered manner such that the cladding metal materials face each other, it is efficient and advantageous in production. In consideration of warpage during cooling and the like, it is preferable that the base steel plate materials are equal in thickness to one another, and so are the cladding metal materials.

Then, after heating the slab to a temperature range of 1000 °C or higher when measured at a 1/2 position of the slab thickness, the slab is rolled with a rolling reduction ratio of 2.0 or more to obtain a rolled clad material made of a base steel plate and a cladding metal.

Here, when the heating temperature is lower than 1000 °C, the rolling amount in the high temperature region can not be sufficiently secured and the bonding or joining property is deteriorated. Therefore, from the viewpoint of ensuring the corrosion resistance of the cladding metal and securing the bonding or joining of the cladding metal to the base steel plate, the heating temperature is preferably 1000 °C or higher. It is more preferably 1050 °C or higher. However, when the heating temperature exceeds 1300 °C, the crystal grains become coarse and the toughness of the base steel plate may be deteriorated. Therefore, the heating temperature is preferably 1300 °C or lower.

In bonding or joining the base steel plate and the cladding metal together, by performing rolling at high temperature, metals gain bonding strength, and by setting the rolling reduction ratio to 2.0 or more, the base steel plate and the cladding metal can be satisfactorily bonded or joined together. Also, by performing rolling with a rolling reduction ratio of 2.0 or more, the crystal grains of the base steel plate are refined and the toughness of the base steel plate is improved. The rolling reduction ratio is preferably 3.0 or more. The upper limit of the rolling reduction ratio is not particularly limited, yet is normally about 20.0.

The rolling reduction ratio is given by: the thickness of the slab (before rolling)/the thickness of the rolled clad material (after rolling).

In addition, from the viewpoint of avoiding the formation of precipitates of the cladding metal and ensuring corrosion resistance, it is desirable that the temperature of the steel plate surface at the end of rolling is 900 °C or higher.

Then, the rolled clad material is cooled until the temperature at the surface of the base steel plate (the surface of the base steel plate on the side not bonded or joined to the cladding metal) drops to or below the $Ar_3$ point, such that the cooling rate at the surface of the base steel plate (the surface of the base steel plate on the side not bonded or joined to the cladding metal) is 30 °C/s or higher (preferably 40 °C/s or higher) and the cooling rate at the inner portion of the base steel plate is 15 °C/s or lower (preferably 10 °C/s or lower).

The $Ar_3$ point is calculated by Expression (2):

$$Ar_3 \ (°C) = 868 - 396C + 25Si - 68Mn - 21Cu - 36Ni - 25Cr - 30Mo \qquad (2).$$

Here, the symbol of each element in Expression (2) indicates the content in mass% of the element in the steel plate, and any element not contained is calculated as 0.

From the viewpoint of avoiding the formation of precipitates in the cladding metal and ensuring corrosion resistance, it is desirable that the cooling start temperature is 850 °C or higher.

The lower limit of the cooling rate at the inner portion of the base steel plate is not particularly limited, yet is normally about 0.5 ° C/s.

The lower limit of the cooling end temperature is not particularly limited, yet is normally 200 °C or higher when measured at the inner portion of the base steel plate.

By performing such cooling, the base steel plate may comprise a microstructure of a surface portion containing, in terms of area fraction, at least one of a bainite phase or a martensite phase in an amount of 80 % or more in total, and a microstructure of an inner portion containing, in terms of area fraction, a ferrite phase in an amount of 30 % or more.

In performing the above cooling, it is necessary to set the cooling process and cooling conditions in consideration of the thicknesses of the base steel plate and the cladding metal and the form of the slab.

For example, in the case of a rolled clad material obtained by using a slab in which a base steel plate material/a cladding metal material/a cladding metal material/a base steel plate material are piled on top of one another in the stated order (the thickness of each base steel plate is 10 mm and the thickness of each cladding metal is 3 mm), it is possible to control the cooling rate at the inner portion of the base steel plate to be 15 °C/s or lower by cooling the rolled clad material from both sides by water cooling such that the cooling rate at the surface of the rolled clad material (the surface of the base steel plate on the side not bonded or joined to the cladding metal) is 30 °C/s or higher and 50 °C/s or lower.

The temperature at the surface of the base steel plate (the surface of the base steel plate on the side not bonded or joined to the cladding metal) can be measured with a radiation thermometer, a thermocouple, or the like. The temperature at the inner portion of the base steel plate can be determined by, for example, the plate thickness, surface temperature, or cooling conditions through simulation calculation or the like. For example, the temperature at the inner portion of the base steel plate can be determined by calculating the temperature distribution in the plate thickness direction using a finite difference method. The cooling rate at the surface of the base steel plate and the cooling rate at the inner portion of the base steel plate can be calculated from the temperature measured or determined as mentioned above.

Then, the resulting rolled clad material is subjected to tempering treatment at a tempering temperature of 550 °C to 750 °C and a holding time of 100 minutes or less. By performing the tempering treatment under such conditions, the hardness at the surface portion of the base steel plate decreases, the difference in hardness between the surface portion and the inner portion decreases, improving the ductility of the base steel plate.

Therefore, the tempering temperature is 550 °C to 750 °C and the holding time is 100 minutes or less. The tempering temperature is preferably 600 °C or higher. The tempering temperature is preferably 700 °C or lower. The holding time is preferably 1 minute or more. The holding time is preferably 60 minutes or less.

As used herein, the tempering temperature is the temperature as measured at a 1/2 position of the thickness in the thickness direction in the base steel plate of the rolled clad material.

In the case of using a slab in which a base steel plate material/a cladding metal material/a cladding metal material/a base steel plate material are piled on top of one another in the stated order, the cladding metals are separated by the separating agent applied therebetween, and the resulting rolled clad material is formed into clad steel plates as finished products.

EXAMPLES

Under the conditions listed in Table 3, rolling is performed on a slab in which base steel plate materials having the chemical compositions as listed in Table 1 (with the balance being Fe and inevitable impurities) and cladding metal materials of austenitic stainless steel or austenitic-ferritic stainless steel having the chemical compositions as listed in Table 2 (with the balance being Fe and inevitable impurities) are piled such that a base steel plate material (thickness: 60mm)/a cladding metal material (thickness: 18 mm)/a cladding metal material (thickness: 18 mm)/a base steel plate material (thickness: 60 mm) are stacked on top of one another in the stated order, and a rolled clad material is obtained. Then, the resulting rolled clad material is subjected to cooling to a temperature at or below the $Ar_3$ point and tempering under the conditions listed in Table 3, then the cladding metals were separated, and a clad steel plate was obtained. In each case, the tempering time was set to 10 minutes. The manufacturing condition (b) in Table 3 indicates a general quenching and tempering process. Specifically, the rolled clad material is cooled after rolling, reheated to 900 °C, water-cooled after reheating, then cooled to room temperature, then heated again to 550 °C, and held at that temperature for 10 minutes.

Test specimens were taken from the clad steel plates thus obtained, and (1) observation of metallic microstructure, (2) hardness test, (3) tensile test, (4) toughness evaluation, and (5) corrosion resistance evaluation were carried out as follows. The results are listed in Table 4.

(1) Observation of metallic microstructure

From each obtained clad steel plate, a specimen for microstructure observation is taken such that the plane parallel to the surface of the base steel plate becomes the observation plane. Then, the observation plane is polished, etched in a 3 vol% nital solution to reveal the microstructure, and the microstructure is observed and imaged with a scanning electron microscope (magnification: 3000 times). From the obtained micrographs, the microstructures are identified by image interpretation.

Specifically, the above-described observation of metallic microstructure is performed in 10 fields at a position of 1 mm in depth in the thickness direction from the surface of each base steel plate (on the side not bonded or joined to the cladding metal), and the result of averaging the occupied area fractions of each phase in the micrographs in each field is used as the area fraction of the phase in the surface portion of the base steel plate.

In addition, the above-described observation of metallic microstructure is performed in 10 fields at a position of 1 mm in depth in the thickness direction from the interface between the base steel plate and the cladding metal bonded or joined together, and the result of averaging the occupied area fractions of each phase in the micrographs in each field is used as the area fraction of the phase in the inner portion of the base steel plate.

(2) Hardness test

The difference in hardness between the surface portion and the inner portion of each base steel plate was measured by a Vickers test. Specifically, a test specimen was taken from each base steel plate such that a cross section (L-cross section) taken in the thickness direction parallel to the rolling direction of the clad steel plate became the measurement surface. Then, using each sampled specimen, the hardness of the surface portion and the hardness of the inner portion of the base steel plate were respectively measured in terms of Vickers hardness at a position of 1 mm in depth in the thickness direction from the surface of the base steel plate (on the side not bonded or joined to the cladding metal), and at a position of 1 mm in depth in the thickness direction from the interface between the base steel plate and the cladding metal bonded or joined together. Here, the Vickers hardness was measured in accordance with JIS Z 2244 with a test load of 10 kgf. Then, the result of subtracting the measured hardness of the inner portion from the measured hardness of the surface portion was used as the difference in hardness between the surface portion and the inner portion of the base steel plate.

(3) Tensile test

The strength and elongation of each base steel were evaluated by tensile test. Specifically, from each clad steel plate, the cladding metal part was removed by machining, a tensile test specimen of JIS 1A was taken from the base steel plate part, a tensile test according to JIS Z 2241 was carried out, and the tensile strength (TS) and total elongation (El) were determined. The strength was evaluated as good when the tensile strength (TS) was 490 MPa or more, and the ductility was evaluated as good when the total elongation (El) was 16.0 % or more.

(4) Evaluation of toughness

The toughness was evaluated by Charpy impact test. Specifically, a Charpy impact test specimen (length: 55 mm × width: 10 mm × height: 10 mm, notch shape: V notch [provided in a cross section in the thickness direction]) was taken from each base steel plate, and subjected to a Charpy impact test in conformity with JIS Z 2242. When the absorbed energy measured by the Charpy impact test at -40 °C exceeds 100 J, the toughness was evaluated as being good.

(5) Evaluation of corrosion resistance

Corrosion resistance was evaluated by copper sulfate-sulfuric acid test. Specifically, a corrosion test specimen of 1 mm × 10 mm × 70 mm was collected from the cladding metal part of each clad steel plate, and each corrosion test specimen was used to conduct a copper sulfate-sulfuric acid test according to JIS G 0575 (2012). Then, those having no cracks at the top of the bent portion thereof after the bend test were evaluated as having good corrosion resistance.

Table 1

| Base steel No. | Chemical composition (mass%) | | | | | | | | | | | | | | | | | Remarks |
|---|---|---|---|---|---|---|---|---|---|---|---|---|---|---|---|---|---|---|
| | C | Si | Mn | P | S | Ni | Cr | Mo | V | Nb | Ti | Al | Cu | Ca | B | REM | Ceq | |
| 1 | 0.05 | 0.16 | 1.35 | 0.012 | 0.007 | - | - | - | - | - | - | - | - | - | - | - | 0.28 | Conforming steel |
| 2 | 0.10 | 0.19 | 1.68 | 0.016 | 0.005 | - | - | - | - | - | - | - | - | - | - | - | 0.38 | Conforming steel |
| 3 | 0.02 | 0.43 | 1.75 | 0.009 | 0.006 | - | - | - | - | - | - | - | - | - | - | - | 0.31 | Conforming steel |
| 4 | 0.10 | 0.97 | 1.25 | 0.005 | 0.004 | - | - | - | - | - | - | - | - | - | - | - | 0.31 | Conforming steel |
| 5 | 0.06 | 0.10 | 1.34 | 0.013 | 0.009 | - | - | - | - | - | - | - | - | - | - | - | 0.28 | Conforming steel |
| 6 | 0.05 | 0.21 | 1.98 | 0.017 | 0.004 | - | - | - | - | - | - | - | - | - | - | - | 0.38 | Conforming steel |
| 7 | 0.09 | 0.27 | 0.82 | 0.006 | 0.002 | - | - | - | - | - | - | - | - | - | - | - | 0.23 | Conforming steel |
| s | 0.04 | 0.34 | 1.36 | 0.029 | 0.012 | - | - | - | - | - | - | - | - | - | - | - | 0.27 | Conforming steel |
| 9 | 0.05 | 0.35 | 1.38 | 0.003 | 0.002 | - | - | - | - | - | - | - | - | - | - | - | 0.28 | Conforming steel |
| 10 | 0.05 | 0.46 | 1.49 | 0.009 | 0.020 | - | - | - | - | - | - | - | - | - | - | - | 0.30 | Conforming steel |
| 11 | 0.06 | 0.71 | 1.55 | 0.013 | 0.001 | - | - | - | - | - | - | - | - | - | - | - | 0.32 | Conforming steel |
| 12 | 0.04 | 0.36 | 1.04 | 0.017 | 0.010 | - | - | - | - | - | - | - | - | - | - | - | 0.21 | Conforming steel |
| 13 | 0.08 | 0.22 | 1.76 | 0.009 | 0.005 | 0.56 | 0.24 | 0.15 | - | - | - | 0.025 | 0.12 | - | - | - | 0.50 | Conforming steel |
| 14 | 0.07 | 0.81 | 1.37 | 0.006 | 0.003 | 0.03 | - | - | - | - | - | - | - | - | - | - | 0.30 | Conforming steel |
| 15 | 0.04 | 0.65 | 1.49 | 0.013 | 0.005 | - | 0.02 | - | - | - | - | - | - | - | - | - | 0.29 | Conforming steel |
| 16 | 0.04 | 0.33 | 1.38 | 0.009 | 0.003 | - | - | 0.01 | - | - | - | - | - | - | - | - | 0.27 | Conforming steel |
| 17 | 0.03 | 0.24 | 1.33 | 0.011 | 0.006 | - | - | - | 0.003 | - | - | - | - | - | - | - | 0.25 | Conforming steel |
| 18 | 0.06 | 0.46 | 1.62 | 0.013 | 0.007 | - | - | - | - | 0.007 | - | - | - | - | - | - | 0.33 | Conforming steel |
| 19 | 0.07 | 0.58 | 1.34 | 0.007 | 0.003 | - | - | - | - | - | 0.006 | - | - | - | - | - | 0.29 | Conforming steel |
| 20 | 0.06 | 0.64 | 1.48 | 0.009 | 0.002 | - | - | - | - | - | - | 0.007 | - | - | - | - | 0.31 | Conforming steel |
| 21 | 0.05 | 0.32 | 1.39 | 0.006 | 0.003 | - | - | - | - | - | - | - | 0.02 | - | - | - | 0.28 | Conforming steel |
| 22 | 0.05 | 0.77 | 1.38 | 0.007 | 0.004 | - | - | - | - | - | - | - | - | 0.0004 | - | - | 0.28 | Conforming steel |
| 23 | 0.07 | 0.26 | 1.29 | 0.009 | 0.005 | - | - | - | - | - | - | - | - | - | 0.0003 | - | 0.29 | Conforming steel |
| 24 | 0.06 | 0.17 | 1.27 | 0.004 | 0.004 | - | - | - | - | - | - | - | - | - | - | 0.0003 | 0.27 | Conforming steel |

(continued)

| Base steel No. | Chemical composition (mass%) | | | | | | | | | | | | | | | | | Remarks |
|---|---|---|---|---|---|---|---|---|---|---|---|---|---|---|---|---|---|---|
| | C | Si | Mn | P | S | Ni | Cr | Mo | V | Nb | Ti | Al | Cu | Ca | B | REM | Ceq | |
| 25 | 0.11 | 0.42 | 1.59 | 0.003 | 0.003 | - | - | - | - | - | - | - | - | - | - | - | 0.38 | Comparative steel |
| 26 | 0.06 | 0.26 | 0.76 | 0.005 | 0.003 | - | - | - | - | - | - | - | - | - | - | - | 0.19 | Comparative steel |
| 27 | 0.10 | 0.47 | 1.89 | 0.005 | 0.002 | 0.25 | 0.31 | 0.15 | - | - | - | - | - | - | - | - | 0.52 | Comparative steel |

Table 2

| Cladding metal ID | Type | Chemical composition (mass%) | | | | | | | | |
|---|---|---|---|---|---|---|---|---|---|---|
| | | C | Si | Mn | P | S | Ni | Cr | Mo | N |
| A | SUS304L | 0.02 | 0.52 | 1.05 | 0.010 | 0.008 | 10.2 | 18.5 | - | - |
| B | SUS316L | 0.02 | 0.35 | 1.13 | 0.016 | 0.012 | 12.4 | 17.5 | 2.2 | - |
| C | SUS329J3L | 0.02 | 0.31 | 0.81 | 0.020 | 0.001 | 5.6 | 22.5 | 3.2 | 0.16 |

Table 3

| Manufacturing condition ID | Slab heating temp. (°C) | Rolling redution ratio | Thickness of each base steel plate of rolled clad material (mm) | Thickness of each cladding metal of rolled clad material (mm) | Cooling rate after rolling (°C/s) | | Cooling after rolling | Reheating temp. (°C) | Cooling after reheating | Tempering temp. (°C) |
|---|---|---|---|---|---|---|---|---|---|---|
| | | | | | Surface portion of base steel plate | Inner portion of base steel plate | | | | |
| (a) | 1200 | 6.0 | 10.0 | 3.0 | 35 | 8 | water cooling | - | - | 600 |
| (b) | 1200 | 6.0 | 10.0 | 3.0 | 2 | 0.3 | air cooling | 900 | water cooling | 550 |
| (c) | 1200 | 6.0 | 10.0 | 3.0 | 2 | 0.3 | air cooling | - | - | 550 |
| (d) | 1200 | 6.0 | 10.0 | 3.0 | 60 | 18 | water cooling | - | - | 600 |
| (e) | 1200 | 6.0 | 10.0 | 3.0 | 25 | 16 | water cooling | - | - | 600 |

Table 4

| No. | Base steel No. | Cladding metal ID | Manufacturing condition ID | (1) Observation of metallic microstructure | | | | (2) Hardness test | (3) Tensile test | | (4) Toughness evaluation | (5) Corrosion resistance evaluation | Remarks |
|---|---|---|---|---|---|---|---|---|---|---|---|---|---|
| | | | | Surface portion of base steel plate | | Inner portion of base steel plate | | Difference in hardness between surface portion and inner portion of base steel plate | | | | | |
| | | | | Total area ratio of bainite phase and martensite phase (%) | Residual microstructure | Area ratio of ferrite phase (%) | Residual microstructure | | TS (MPa) | El (%) | vE (J) | | |
| 1 | 1 | A | (a) | 87 | ferrite phase | 43 | bainite phase, pearlite phase | 60 | 505 | 18.2 | 203 | no cracks | Example |
| 2 | 2 | B | (a) | 92 | ferrite phase | 37 | bainite phase, pearlite phase | 51 | 507 | 17.1 | 196 | no cracks | Example |
| 3 | 3 | A | (a) | 90 | ferrite phase | 40 | bainite phase, pearlite phase | 55 | 498 | 18.6 | 209 | no cracks | Example |
| 4 | 4 | B | (a) | 89 | ferrite phase | 41 | bainite phase, pearlite phase | S9 | 492 | 17.9 | 213 | no cracks | Example |
| 5 | 5 | A | (a) | 87 | ferrite phase | 44 | bainite phase, pearlite phase | 63 | S03 | 17.3 | 221 | no cracks | Example |
| 6 | 6 | B | (a) | 93 | ferrite phase | 36 | bainite phase, pearlite phase | 46 | 507 | 18.9 | 156 | no cracks | Example |
| 7 | 7 | A | (a) | 8S | ferrite phase | 49 | bainite phase, pearlite phase | 68 | 505 | 17.8 | 208 | no cracks | Example |
| 8 | 8 | B | (a) | 87 | ferrite phase | 45 | bainite phase, pearlite phase | 65 | 505 | 16.7 | 197 | no cracks | Example |
| 9 | 9 | A | (a) | 87 | ferrite phase | 43 | bainite phase, pearlite phase | S7 | 497 | 19.2 | 196 | no cracks | Example |
| 10 | 10 | B | (a) | 89 | ferrite phase | 41 | bainite phase, pearlite phase | S9 | 496 | 17.2 | 212 | no cracks | Example |

(continued)

| No. | Base steel No. | Cladding metal ID | Manufacturing condition ID | (1) Observation of metallic microstructure | | | | (2) Hardness test | (3) Tensile test | | (4) Toughness evaluation | (5) Corrosion resistance evaluation | Remarks |
|---|---|---|---|---|---|---|---|---|---|---|---|---|---|
| | | | | Surface portion of base steel plate | | Inner portion of base steel plate | | Difference inhardness between surface portion and inner portion of base steel plate | TS (MPa) | El (%) | vE (J) | | |
| | | | | Total area ratio of bainite phase and martensite phase (%) | Residual microstructure | Area ratio of ferrite phase (%) | Residual microstructure | | | | | | |
| 11 | 11 | A | (a) | 90 | ferrite phase | 40 | bainite phase, pearlite phase | S9 | 501 | 16.8 | 209 | no cracks | Example |
| 12 | 12 | B | (a) | 80 | ferrite phase | 51 | bainite phase, pearlite phase | 6S | 490 | 19.8 | 196 | no cracks | Example |
| 13 | 13 | A | (a) | 97 | ferrite phase | 30 | bainite phase, martensite phase | 32 | 506 | 16.3 | 134 | no cracks | Example |
| 14 | 14 | B | (a) | 87 | ferrite phase | 44 | bainite phase, pearlite phase | 63 | 496 | 17.2 | 199 | no cracks | Example |
| 15 | 15 | A | (a) | 88 | ferrite phase | 43 | bainite phase, pearlite phase | S8 | 493 | 19.2 | 211 | no cracks | Example |
| 16 | 16 | B | (a) | 86 | ferrite phase | 46 | bainite phase, pearlite phase | 64 | 501 | 17.6 | 207 | no cracks | Example |

17

EP 3 733 893 B1

(continued)

| Total area ratio of bainite phase and martensite phase (%) | Residual microstructure | Area ratio of ferrite phase (%) | Residual microstructure | Surface portion of base steel plate | | Inner portion of base steel plate | | Difference in hardness between surface portion and inner portion of base steel plate | TS (MPa) | El (%) | vE (J) | | |
|---|---|---|---|---|---|---|---|---|---|---|---|---|---|
| 17 | 17 | A | (a) | 85 | ferrite phase | 46 | bainite phase, pearlite phase | 65 | 507 | 17.4 | 206 | no cracks | Example |
| 18 | 18 | B | (a) | 91 | ferrite phase | 38 | bainite phase, pearlite phase | S3 | 503 | 18.6 | 143 | no cracks | Example |
| 19 | 19 | A | (a) | 88 | ferrite phase | 42 | bainite phase, pearlite phase | 60 | 499 | 17.9 | 186 | no cracks | Example |
| 20 | 20 | B | (a) | 88 | ferrite phase | 40 | bainite phase, pearlite phase | S7 | 501 | 18.3 | 176 | no cracks | Example |
| 21 | 21 | A | (a) | 87 | ferrite phase | 43 | bainite phase, pearlite phase | S7 | 503 | 19.2 | 192 | no cracks | Example |
| 22 | 22 | B | (a) | 87 | ferrite phase | 45 | bainite phase, pearlite phase | 64 | 504 | 17.6 | 196 | no cracks | Example |
| 23 | 23 | A | (a) | 86 | ferrite phase | 42 | bainite phase, pearlite phase | S9 | 503 | 17.8 | 198 | no cracks | Example |
| 24 | 24 | B | (a) | 85 | ferrite phase | 44 | bainite phase, pearlite phase | 57 | 498 | 19.8 | 189 | no cracks | Example |
| 25 | 25 | A | (a) | 92 | ferrite phase | 28 | bainite phase, martensite phase | 30 | 500 | 15.8 | 79 | no cracks | Comparative Example |
| 26 | 26 | B | (a) | 78 | ferrite phase | 52 | bainite phase, pearlite phase | 78 | 461 | 17.1 | 202 | no cracks | Comparative Example |
| 27 | 27 | A | (a) | 97 | ferrite phase | 27 | bainite phase, martensite phase | 32 | 502 | 14.2 | 32 | no cracks | Comparative Example |

(continued)

| Total area ratio of bainite phase and martensite phase (%) | Residual microstructure | Area ratio of ferrite phase (%) | Residual microstructure | Surface portion of base steel plate | | Inner portion of base steel plate | | Difference in hardness between surface portion and inner portion of base steel plate | TS (MPa) | El (%) | vE (J) | | |
|---|---|---|---|---|---|---|---|---|---|---|---|---|---|
| 28 | 1 | B | (b) | 93 | ferrite phase | 43 | bainite phase, pearlite phase | 63 | 501 | 18.4 | 197 | cracks | Reference Example |
| 29 | 1 | A | (c) | 0 | ferrite phase, pearlite phase | 68 | pearlite phase | 15 | 443 | 22.4 | 206 | cracks | Comparative Example |
| 30 | 1 | A | (d) | 90 | ferrite phase | 28 | bainite phase, martensite phase | 28 | 502 | 18.2 | 68 | no cracks | Comparative Example |
| 31 | 1 | A | (e) | 78 | ferrite phase | 29 | bainite phase, martensite phase | 18 | 472 | 20.2 | 65 | no cracks | Comparative Example |
| 32 | 1 | C | (a) | 85 | ferrite phase | 42 | bainite phase, pearlite phase | 62 | S03 | 18.5 | 212 | no cracks | Example |

From Table 4, it is understood that all of our examples are excellent in ductility, while securing high strength, high toughness, and corrosion resistance.

In contrast, for No. 25, since the C content of the base steel plate is too large, a sufficient amount of ferrite phase was not formed in the inner portion of the base steel plate, and the ductility and toughness were inferior.

For No. 26, since the Ceq of the base steel plate was not sufficient, hardenability was insufficient, and sufficient strength could not be obtained.

For No. 27, since the Ceq of the base steel plate was too large, a sufficient amount of ferrite phase was not formed in the inner portion of the base steel plate, and the toughness was inferior. The ductility was also inferior.

For No. 28, as the clad steel plate cooled after rolling was reheated to 900 °C, corrosion resistance deteriorated.

For No. 29, since the cooling rate at the surface of the base steel plate during cooling after the rolling was not sufficient, a sufficient amount of bainite phase and martensite phase were not formed in the surface portion of the base steel plate, and the strength was inferior.

For No. 30, since the cooling rate at the inner portion of the base steel plate during cooling after the rolling was too high, a sufficient amount of ferrite phase was not formed in the inner portion of the base steel plate, and the toughness was inferior.

For No. 3 1, since the cooling rate at the surface during cooling after the rolling was not sufficient, a sufficient amount of bainite phase and martensite phase were not formed in the surface portion of the base steel plate, and the strength was inferior. Also, since the cooling rate at the inner portion of the base steel plate during cooling after the rolling was too high, a sufficient amount of ferrite phase was not formed in the inner portion of the base steel plate, and the toughness was inferior.

REFERENCE SIGNS LIST

1      base steel plate material
2      cladding metal material
3      separating agent
4      spacer
5      welded portion
10     clad slab

**Claims**

1.  A clad steel plate comprising: a base steel plate; and a cladding metal made of a corrosion-resistant alloy of an austenitic stainless steel, an austenitic-ferritic duplex stainless steel or a nickel-based alloy bonded or joined to one surface of the base steel plate, wherein
    the base steel plate comprises:
    a chemical composition containing, in mass%,

    C: 0.02 % to 0.10 %,
    Si: 1.00 % or less,
    Mn: 0.50 % to 2.00 %,
    P: 0.030 % or less, and
    S: 0.020 % or less,

    optionally, in mass%, at least one selected from the group consisting of

    Ni: 0.01 % to 1.00 %,
    Cr: 0.01 % to 0.50 %,
    Mo: 0.01 % to 0.50 %,
    V: 0.001 % to 0.100 %,
    Nb: 0.005 % to 0.050 %,
    Ti: 0.005 % to 0.100 %,
    Al: 0.005 % to 0.200 %,
    Cu: 0.01 % to 0.70 %,
    Ca: 0.0003 % to 0.0050 %,

B: 0.0003 % to 0.0030 %, and
REM: 0.0003 % to 0.0100 %,

with the balance consisting of Fe and inevitable impurities, where Ceq is 0.20 to 0.50, Ceq being defined by:

$$Ceq = C + Mn/6 + (Cu + Ni)/15 + (Cr + Mo + V)/5 \qquad (1),$$

where C, Mn, Cu, Ni, Cr, Mo, and V are contents in mass% of the corresponding elements in the chemical composition of the base steel plate,

a microstructure of a surface portion containing, in terms of area fraction, at least one of a bainite phase or a martensite phase in an amount of 80 % or more in total; and
a microstructure of an inner portion containing, in terms of area fraction, a ferrite phase in an amount of 30 % or more, and
the difference in hardness between the surface portion and the inner portion of the base steel plate is 25 or more to 80 or less in terms of Vickers hardness,
where the microstructure and the hardness of the surface portion of the base steel plate are ones measured at a position of 1 mm in depth in a thickness direction from another surface of the base steel plate on a side not bonded or joined to the cladding metal, and the microstructure and the hardness of the inner portion of the base steel plate are ones measured at a position of 1 mm in depth in the thickness direction from an interface between the base steel plate and the cladding metal bonded or joined together,
wherein the microstructure is measured as an average of occupied area fractions of each phase in 10 observation fields imaged with a scanning electron microscope where the each phase is identified through an image interpretation, and wherein the difference in hardness is measured as a result of subtracting a hardness of the inner portion from a hardness of the surface portion where the hardness is measured by a Vickers test in accordance with JIS Z 2244 with a test load of 10kgf.

## Patentansprüche

1. Plattiertes Stahlblech, umfassend: ein Basisstahlblech; und ein Plattierungsmetall aus einer korrosionsbeständigen Legierung eines austenitischen rostfreien Stahls, eines austenitisch-ferritischen rostfreien Duplexstahls oder einer Legierung auf Nickelbasis, welches mit einer Oberfläche des Basisstahlblechs aneinandergefügt oder verbunden ist, wobei
das Basisstahlblech umfasst:

eine chemische Zusammensetzung, die in Masse-% enthält:

C: 0,02 % bis 0,10 %,
Si: 1,00 % oder weniger,
Mn: 0,50 % bis 2,00 %,
P: 0,030 % oder weniger, und
S: 0,020 % oder weniger,

gegebenenfalls, in Masse-%, mindestens eines, ausgewählt aus der Gruppe, bestehend aus

Ni: 0,01 % bis 1,00 %,
Cr: 0,01 % bis 0,50 %,
Mo: 0,01 % bis 0,50 %,
V: 0,001 % bis 0,100 %,
Nb: 0,005 % bis 0,050 %,
Ti: 0,005 % bis 0,100 %,
Al: 0,005 % bis 0,200 %,
Cu: 0,01 % bis 0,70 %,
Ca: 0,0003 % bis 0,0050 %,
B: 0,0003 % bis 0,0030 % und
REM: 0,0003 % bis 0,0100 %,

wobei der Rest aus Fe und unvermeidlichen Verunreinigungen besteht, wobei Ceq 0,20 bis 0,50 beträgt, wobei Ceq definiert ist durch:

$$Ceq = C + Mn/6 + (Cu + Ni)/15 + (Cr + Mo + V)/5 \qquad (1),$$

wobei C, Mn, Cu, Ni, Cr, Mo und V die Gehalte in Masse-% der entsprechenden Elemente in der chemischen Zusammensetzung des Basisstahlblechs sind,
ein Gefüge eines Oberflächenbereichs, das, ausgedrückt als Flächenanteil, mindestens eine einer Bainitphase oder einer Martensitphase in einer Menge von insgesamt 80 % oder mehr enthält, und
ein Gefüge eines inneren Teils, das, ausgedrückt als Flächenanteil, eine Ferritphase in einer Menge von 30 % oder mehr enthält, und
der Härteunterschied zwischen dem Oberflächenabschnitt und dem inneren Abschnitt des Basisstahlblechs, ausgedrückt als Vickershärte, 25 oder mehr bis 80 oder weniger beträgt,
wobei das Gefüge und die Härte des Oberflächenabschnitts des Basisstahlblechs diejenigen sind, die an einer Position von 1 mm in der Tiefe in einer Dickenrichtung von einer anderen Oberfläche des Basisstahlblechs auf einer Seite gemessen werden, die nicht mit dem Plattierungsmetall aneinandergefügt oder verbunden ist, und das Gefüge und die Härte des inneren Abschnitts des Basisstahlblechs diejenigen sind, die an einer Position von 1 mm in der Tiefe in der Dickenrichtung von einer Grenzfläche zwischen der Basisstahlplatte und dem Plattierungsmetall, die aneinandergefügt oder verbunden sind, gemessen werden,
wobei das Gefüge als ein Durchschnitt von besetzten Flächenanteilen jeder Phase in 10 Beobachtungsfeldern gemessen wird, die mit einem Rasterelektronenmikroskop abgebildet werden, wobei jede Phase durch eine Bildinterpretation identifiziert wird und wobei der Unterschied in der Härte als ein Ergebnis der Subtraktion einer Härte des inneren Abschnitts von einer Härte des Oberflächenabschnitts gemessen wird, wobei die Härte durch einen Vickers-Test gemäß JIS Z 2244 mit einer Testlast von 10 kgf gemessen wird.

**Revendications**

1. Plaque d'acier plaquée comprenant : une plaque d'acier de base ; et un métal de placage constitué d'un alliage résistant à la corrosion d'un acier inoxydable austénitique, d'un acier inoxydable duplex austénitique-ferritique ou d'un alliage à base de nickel lié ou joint à une surface de la plaque d'acier de base, dans laquelle la plaque d'acier de base comprend :

une composition chimique contenant, en % massique,

C : de 0,02 % à 0,10 %,
Si : 1,00 % ou moins,
Mn : de 0,50 % à 2,00 %,
P : 0,030 % ou moins, et
S : 0,020 % ou moins,

éventuellement, en % massique, au moins un élément choisi dans le groupe constitué par

Ni : de 0,01 % à 1,00 %,
Cr : de 0,01 % à 0,50 %,
Mo : de 0,01 % à 0,50 %,
V: de 0,001 % à 0,100 %,
Nb : de 0,005 % à 0,050 %,
Ti : de 0,005 % à 0,100 %,
Al : de 0,005 % à 0,200 %,
Cu : de 0,01 % à 0,70 %,
Ca : de 0,0003 % à 0,0050 %,
B : de 0,0003 % à 0,0030 %, et
terres rares : de 0,0003 % à 0,0100 %,

le reste étant du Fe et des impuretés inévitables, où Ceq va de 0,20 à 0,50, Ceq étant défini par :

$$Ceq = C + Mn/6 + (Cu + Ni)/15 + (Cr + Mo + V)/5 \qquad (1),$$

où C, Mn, Cu, Ni, Cr, Mo et V sont les teneurs, en % massique, des éléments correspondants dans la composition chimique de la plaque d'acier de base,

une microstructure d'une partie superficielle contenant, en termes de fraction surfacique, au moins l'une d'une phase de bainite ou d'une phase de martensite à raison de 80 % ou plus au total ; et

une microstructure d'une partie interne contenant, en termes de fraction surfacique, une phase de ferrite à raison de 30 % ou plus, et

la différence de dureté entre la partie superficielle et la partie interne étant de 25 ou plus jusqu'à 80 ou moins en termes de dureté Vickers,

où la microstructure et la dureté de la partie superficielle de la plaque d'acier de base sont mesurées à une position de 1 mm de profondeur dans un sens épaisseur à partir d'une autre surface de la plaque d'acier de base sur un côté non lié ou joint au métal de plaquage, et la microstructure et la dureté de la partie interne de la plaque d'acier de base sont mesurées à une position de 1 mm de profondeur dans le sens épaisseur à partir d'une interface entre la plaque d'acier de base et le métal de placage liés ou joints ensemble,

dans laquelle la microstructure est mesurée sous forme de moyenne des fractions surfaciques occupées par chaque phase sur 10 champs d'observations capturés au moyen d'un microscope électronique à balayage, où chaque phase est identifiée par interprétation d'image, et dans laquelle la différence de dureté est mesurée sous forme de résultat de la soustraction d'une dureté de la partie interne d'une dureté de la partie superficielle, où la dureté est mesurée par un essai Vickers d'après JIS Z 2244 avec une charge d'essai de 10 kgf.

# FIG.1

**EP 3 733 893 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7292445 A
- JP H5154672 A
- JP 2015224376 A
- JP 2008030086 A